# EUROPÄISCHE PATENTANMELDUNG

(11) **EP 1 915 899 A1**
(43) Veröffentlichungstag der Anmeldung: **30.04.2008**
(21) Anmeldenummer: 07020860.8
(22) Anmeldetag: 24.10.2007
(51) Int. Cl.: A01F 25/16

(54) **Verfahren und Einrichtung zum Befestigen und Abdichten von Folien an Siloanlagen**

(30) Priorität: 26.10.2006 DE 102006050980; 22.01.2007 DE 102007004162
(71) Anmelder: Böck, Klaus, 83308 Trostberg (DE)
(72) Erfinder: Die Erfindernennung liegt noch nicht vor

(57) **Zusammenfassung**

Die Größe der Siloanlagen hat durch Konzentration von Betrieben sehr zugenommen. Dadurch wird die Abdeckung und Abdichtung durch die großen Folien immer schwieriger. Teilweise wurde dazu übergegangen, die Abdeckung der besseren Handhabung wegen in mehrere Längs- oder Querstreifen aufzuteilen. Die bisher verwendeten Sandsäcke zur Abdichtung und Befestigung werden durch Einpressen der Folienränder in die Silage ersetzt.

Zur Verbesserung der Haltbarkeit und Sicherung der Dichte werden anstelle zusätzlicher Mittel, die zugleich mit der Schlaufe oder nachträglich eingebracht werden, andere Möglichkeiten dazu durch vorteilhafte Ausgestaltung der Presseinrichtung vorgeschlagen. Eine andere Maßnahme soll am Ende die Schlaufe wegen der schrägen Pressplatte auf die notwendige Tiefe bringen.

In Fig. 2 werden von der Pressplatte (4) an der Außenseite der Kufe (5) der Presseinrichtung (6) zunächst der Folienrand (2) als Schlaufe (9) und danach der Folienrand (3) als Schlaufe (10) in die Silooberfläche (1) eingedrückt und damit befestigt und abgedichtet.

## Beschreibung

Die Erfindung betrifft ein Verfahren nach dem Oberbegriff des Hauptanspruches und Einrichtungen zur Durchführung des Verfahrens in den Unteransprüchen.

Die Größe der Siloanlagen hat durch Konzentration von Betrieben sehr zugenommen. Dadurch wird die Abdeckung und Abdichtung durch große Folien immer schwieriger. Teilweise wurde dazu übergegangen, die Abdeckung der besseren Handhabung wegen in mehrere Längs- oder Querstreifen aufzuteilen. Die Abdichtung und Befestigung erfolgt durch Beschweren der Ränder mit Sandsäcken, eine große Anzahl von ihnen muß über die Silooberfläche verteilt werden, was gerade bei großen Flächen ohne Transporthilfen von außen erleichtert werden kann. Wegen der Verletzungsgefahr der Abdeckung müssen sie von Hand verteilt werden.

Aufgabe vorliegender Erfindung ist es, ein Verfahren zu schaffen, bei dem die Verteilung von Sandsäcken nicht mehr notwendig ist und die Abdichtung und Befestigung der Folienränder ohne große körperliche Anstrengung erfolgt.

Die Aufgabe der Erfindung wird gelöst durch ein Verfahren nach dem kennzeichnenden Teil des Hauptanspruches. Dabei wird der Folienrand durch eine entsprechende Einrichtung in Form einer Schlaufe in die Silooberfläche gedrückt. In der OS DE 101 23 723 werden ein solches Verfahren und in der OS DE 100 53 253 A1 eine Einrichtung für die Abdichtung und Befestigung der Folienränder an den Silowänden vorgeschlagen.

Bei der Verwendung von mehreren Bahnen in Längs- oder Querrichtung werden auch ihre Folienränder zum Befestigen und Abdichten an Stelle von Sandsäcken durch Einpressen in ähnlicher Weise wie am Rand in Form von Schlaufen in die Silooberfläche gedrückt.

Dabei wird zunächst ein Folienrand in die Silooberfläche gedrückt, danach der umgeschlagene Folienrand des zweiten Folienstreifens zurückgeschlagen und als zweite Schlaufe in die schon vorhandene Schlaufe gedrückt.

Diese Doppelschlaufe verdrängt Silomaterial und durch die Rückfederung am Ende der Einpressung werden die beiden Folienränder festgehalten und abgedichtet. Im ungünstigen Fall könnte die Schlaufe mit Regenwasser vollaufen. Da sie nach unten dicht ist, gelangt kein Wasser in die Silage. Das überschüssige Wasser läuft auf jeden Fall durch das Gefälle der Silooberfläche ab.

Bei weniger dichter Lagerung der Silage kann durch schräg zur Oberfläche eingebrachte Schlaufen der notwendige Halt erzielt werden. Eine weitere Möglichkeit der Verbesserung der Haltbarkeit ergibt sich beim Einbringen durch Anhäufung von Folienmaterial am Grund der Schlaufe.

Für große Siloeinheiten ist es zweckmäßig bei entsprechender Gestaltung des Gerätes beide über einander liegende Folienränder gleichzeitig einzudrücken.

Bei sehr dichtem oder zähem Silomaterial wird vor dem Einbringen der Schlaufen die Silooberfläche angeschnitten. Das kann auch gleichzeitig mit dem Eindrücken der Schlaufen durch eine davor angeordnete Schneidvorrichtung geschehen. '

Das Einpressen der Schlaufen erfolgt durch schräg angeordnetes und in die Silooberfläche ragendes Werkzeug, das in einer gemeinsamen Vor- und Hubbewegung an den Folienstößen entlang bewegt wird. Die beiden Bewegungen können durch eine kombinierte Hub- und Vorwärtsbewegung ausgeführt werden.

Dabei wird ein Schreitwerk verwendet, dessen neben einander liegenden Kufen über gleichsinnig laufenden Exzenter angetrieben werden. Die an einer Außenseite einer Kufe schräg angebrachte Druckplatte drückt bei der Vorwärtsbewegung den Folienrand in die Silooberfläche.

In einer bevorzugten Ausführung wird an der Unterseite der Schlaufe, das heißt auf ihrem Grund, diese aufgeweitet oder die Folie zu einem Knäuel zusammengestopft, wodurch sich die Verankerung der Schlaufe wesentlich verbessert.

Neben dem Aufweiten werden weitere Möglichkeiten vorgeschlagen, wie zusätzlich am hinteren Ende der Pressplatte angeordnete Stopfvorrichtungen, die starr, federnd oder angetrieben ausgeführt sein können. Dabei wird davon ausgegangen, dass keine zusätzlichen Antriebe nötig werden.

Dies ist auch bei der vorgeschlagenen Vorschneideeinrichtung für die hoch verdichtete Silage der Fall. An der Presseinrichtung ist am freien äußeren Schreitschuh ein Ausleger angebracht, der vor der äußeren Kante des inneren Schreitschuhes ein Messer in die Silage drückt und so vorab die Silage trennt. Beim Einpressen des Folienrandes muss dieser dann zwischen den beiden Schreitschuhen eingeführt werden.

Zum vollständigen Einbringen der Schlaufe am Ende des möglichen Weges wird die Pressplatte durch eine Verstellvorrichtung vorne abgeschwenkt, wodurch die Schlaufe tiefer eingedrückt wird. Damit wird auch am Ende der Schlaufe ein guter Halt in der Silage erzielt.

Die Verstelleinrichtung der Pressplatte erlaubt weiterhin die Einstellung verschiedener Tiefgänge für die Schlaufe und die Hochstellung auf Höhe der Unterkante der Schreitfüße für den Transport mit und ohne Antrieb. Die Verstellung in die verschiedenen Lagen der Pressplatte erfolgt über einen zentralen Hebel mit Rasten und einer Umschaltung.

Für den Einlauf der Folie unter die Pressplatte ist ein vor geschalteter Führungsdorn vorteilhan. Er liegt mit Federdruck auf der Oberfläche der Folie an der Knicklinie auf.

Zur vollen Ausnützung des Weges muss er ebenso wie die unter Umständen eingesetzte Vorschneideeinrichtung hochgeklappt werden.

Als sehr vorteilhaft hat sich die Trittplatte am hinteren Ende des äußeren Schreitfußes heraus gestellt. Damit kann der Bediener zusätzlichen Druck auf das ganze Gerät ausüben. Zusammen mit einer vorteilhaften Anordnung der Handgriffe sind eine gute Anpassung an die Verhältnisse und zumutbare Beanspruchung des Bedieners geschaffen.

Nach einem weiteren Merkmal der Erfindung wird durch eine zusätzliche Sicherung in Art eines in die Schlaufe eingebrachten Pfropfens an kritischen Stellen der Halt gesichert. Bei entsprechender Ausgestaltung des Pfropfens kann dieser auch zur Befestigung von häufig eingesetzten Vogelschutzgittern verwendet werden.

Der zur Sicherung und Befestigung von zusätzlichen Abdeckungen vorgesehene Pfropfen besteht aus einem flachen Dorn mit Griff. In der oberen und unteren Hälfte weist er zweiseitige knotenartige Verdickungen auf. Dieser Pfropfendorn wird mit seinen flachen Seiten in die Schlaufe gedrückt und nachdem die obere Verdickung die Silooberfläche erreicht hat, wird er um 90° gedreht. Dabei drücken sich die Knoten der unteren Verdickung in die Schlaufe und die Silage und halten ihn fest.

Durch eine breite Ausbildung des Griffes und zusätzliche Haken an seinen Enden nach unten wird das darunter liegende netzartige Vogelschutzgitter und damit auch andere unter ihr liegende Abdeckungen gegen das Abheben festgehalten.

Die Erfindung ist in Ausführungsbeispielen in der Zeichnung dargestellt und wird in nachstehender Beschreibung näher erläutert. Es zeigen:
Fig. 1 die Einbringung der ersten Schlaufe,
Fig. 2 die Einbringung der zweiten Schlaufe,
Fig. 3 die Anordnung von Rand- und Flächenschlaufen bei geteilten Abdeckungen,
Fig. 4 die Seitenansicht einer Presseinrichtung in Arbeitsstellung,
Fig. 5 eine Ansicht von hinten der Fig. 4,
Fig. 6 eine Draufsicht mit Schnitt durch das Getriebe,
Fig. 7 die Seitenansicht einer Stopfeinrichtung,
Fig. 8 die Ansicht der Fig. 7 von hinten,
Fig. 9 die Seitenansicht einer Stopfeinrichtung,
Fig. 10 die Ansicht der Fig. 9 von hinten,
Fig. 11 die Seitenansicht der Presseinrichtung mit Vorschneideeinrichtung,
Fig. 12 die Draufsicht der Fig. 11
Fig. 13 die Presseinrichtung mit abgesetzter Pressplatte für Endbearbeitung und
Fig. 14 die Presseinrichtung mit hochgestellter Pressplatte in Transportstellung.
Fig. 15 und 16 die Ausbildung eines Pfropfendornes.

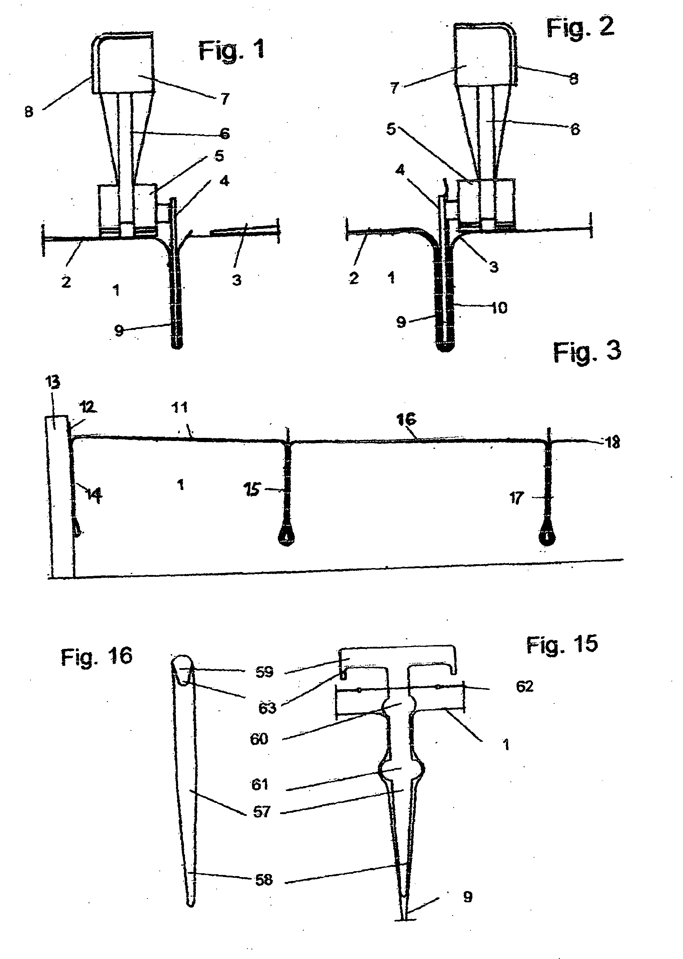

In **Fig. 1** liegen auf der Silooberfläche (1) der eingepresste Folienrand (2) und der zurückgeschlagene Folienrand (3). Durch die Pressplatte (4) an der Außenseite der Kufe (5) der Presseinrichtung (6) mit dem Motor (7) und Handgriff (8) wird der Folienrand (2) als Schlaufe (9) in die Silooberfläche (1) eingedrückt.

In **Fig. 2** wurde nach Beendigung des Vorganges nach Fig. 1 der Folienrand (3) über die Schlaufe (9) umgeschlagen und in umgekehrter Fahrtrichtung der Presseinrichtung (6) durch die Pressplatte (4) als Schlaufe (10) in die vorher gelegte Schlaufe (9) gedrückt.

Nach dem jeweiligen Durchlauf der Pressplatte (4) drückt die beim Einpressen vorgespannte Silage die Schlaufen (9) und (10) zusammen.

In **Fig. 3** ist die Abdeckung (11) auf der Silooberfläche (1) mit ihren Außenrand (12) an der Silowand (13) mit der einfachen Schlaufe (14) befestigt und abgedichtet. Mit der Doppelschlaufe (15) werden die Ränder der Abdeckungen (11) und (16), mit der Doppelschlaufe (17) die Ränder der Abdeckungen (16) und (18) eingebracht. Infolge des Gefälles fließen Regen- und Schneewasser ab.

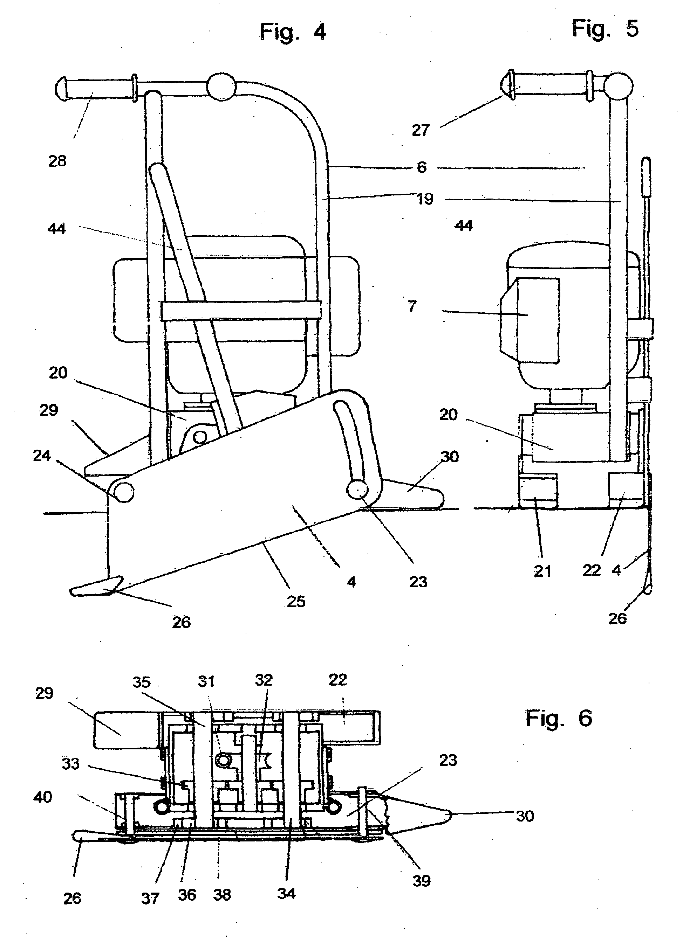

In den **Fig. 4 und 5** sind an der Presseinrichtung (6) mit ihrem Rahmen (19) am Getriebe (20) die Schreitfüße (21) und (22) angeordnet. Die Pressplatte (4) ist am äußeren Schreitfuß (22) in den Lagerungen (23) und (24) angeschlossen und durch ihre schräg nach unten gerichtete Unterkante (25) in Arbeitsstellung. An ihrem hinteren Ende soll das Formstück (26) die Folienschlaufe zu einem Knäuel aufstopfen. Die Trittplatte (29) am Schreitfuß (21) erleichtert die Handhabung. Mit Hebel (44) wird die Pressplatte (4) in die verschiedenen Arbeitstellungen gebracht.

In **Fig. 6** treibt die mit Motor (7) verbundene Schnecke (31) über das Schneckenrad (32) und die Zahnräder (33) die Wellen (34) und (35) an, an deren herausragenden Enden Exzenter (36) angeordnet sind. Ihre Außenlager (37) sind in den Seitenplatten (38) der Schreitfüße (21) und (22) gelagert. Die Pressplatte (4) ist mit den Bolzen (39) und (40) am Schreitfuß (21) angeschlossen. Der Führungsdorn (30) sorgt für eine sorgfältige Einleitung der Folie.

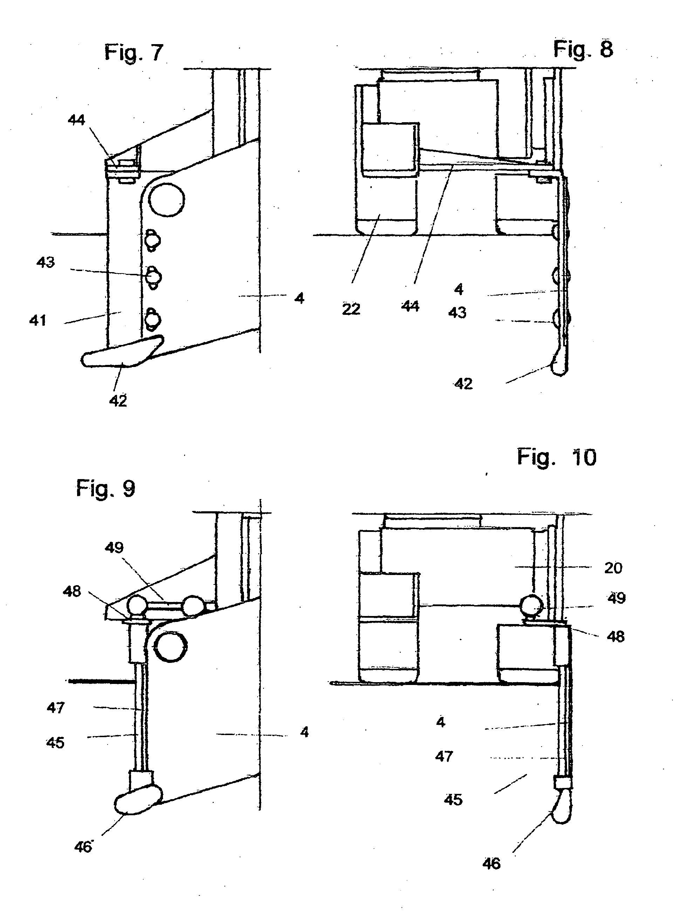

In den **Fig. 7 und 8** ist die Stopfvorrichtung (41) mit dem Stopfstück (42) über die Führungen (43) an der Pressplatte (4) in der Höhe beweglich gelagert und wird über den Hebel (44) vom Schreitfuß (22) aus angetrieben.

In den **Fig. 9 und 10** besteht die Stopfvorrichtung (45) aus dem Drehstück (46) an der Welle (47). Über den Hebel (48) und die Verbindung (49) zum Getriebe (20) wird das Drehstück (46) hin und her bewegt und weitet die Unterkante einer eingepressten Schlaufe aus.

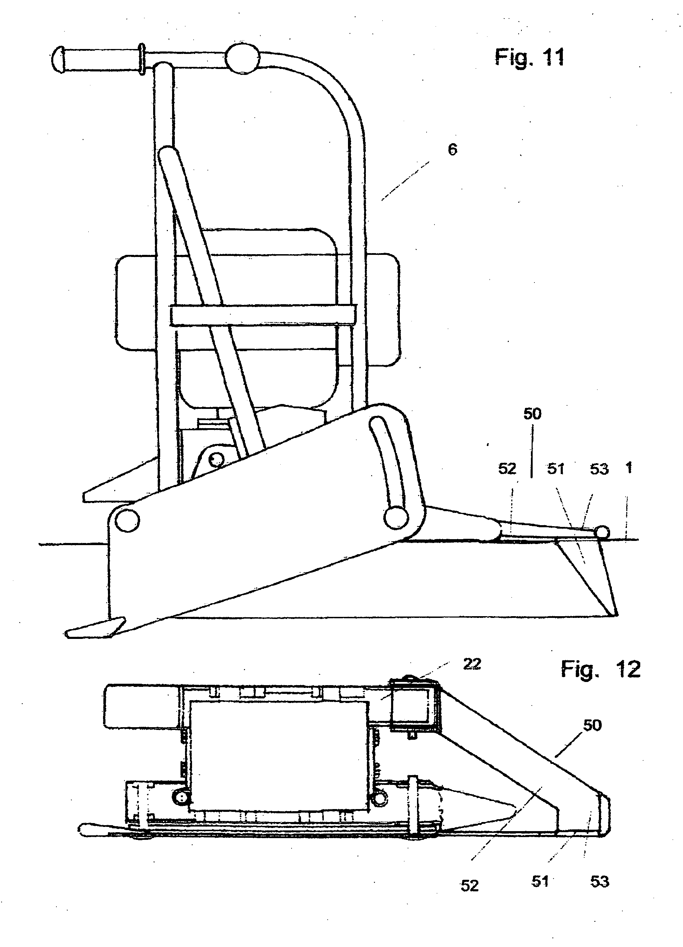

In den **Fig. 11** und 12 ist am Schreitfuß 22 der Presseinrichtung 6 die Vorschneideeinrichtung 50 mit dem Messer 51 und dem Ausleger 52 angeschlossen. Die Gleitplatte 53 stützt sich auf der Silooberfläche 1 ab.

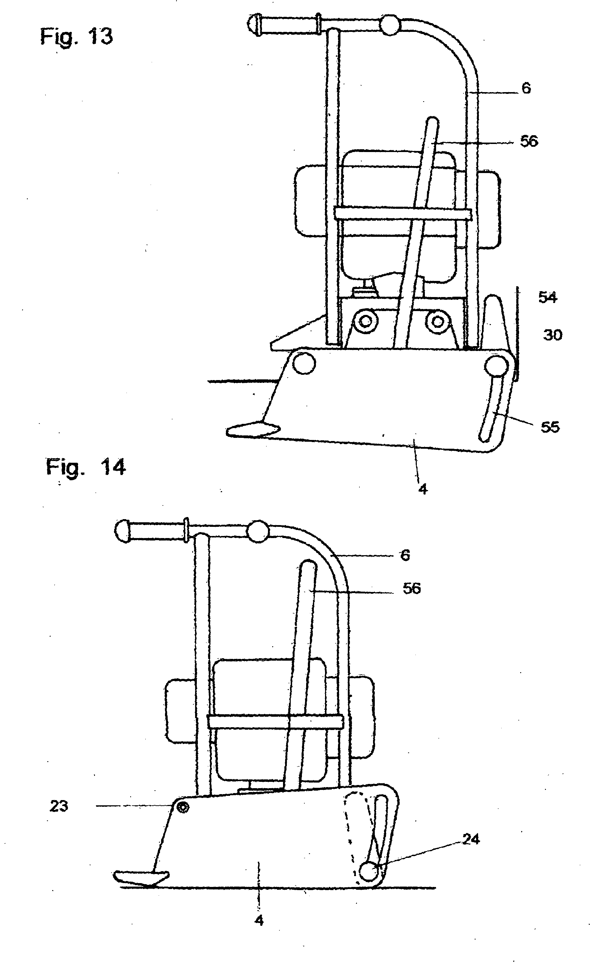

In **Fig. 13** ist die Presseinrichtung (6) am Ende ihres Weges an der Silowand (54) angelangt. Zur vollen Einpressung der Folienschlaufe ist die Pressplatte (4) durch den Hebel (56) mit ihrer Vorderkante über die Führung (55) abgesenkt. Der Führungsdorn (30) und die eventuell eingesetzte Vorschneideeinrichtung (50) wurden zuvor nach oben geschwenkt.

**Fig. 14** zeigt die Presseinrichtung (6) in Transportstellung. Die Pressplatte (4) ist durch den Hebel (56) in den Lagern (23) und (24) nach oben geschwenkt.

**Fig. 15** zeigt den Pfropfendorn (57) in Frontansicht und in **Fig. 16** in der Seitenansicht .Er besteht aus dem schmalen Dorn (58), dem Griff (59) und hat an seiner oberen und unteren Hälfte jeweils zwei seitliche Knoten (60) und (61). Nach Einrücken der Schmalseite in die Schlaufe (62) bis zum Anschlag des Knotens (60) auf der Silooberfläche (1) wird der Griff (59) um eine viertel Umdrehung gedreht. Durch die Auspressung des Knotens (61) erhält der Pfropfendorn (57) einen festen Sitz in der Schlaufe (9) und damit in der Silage. Auf der Silooberfläche ist zusätzlich das Vogelschutzgitter (62) mit einer Maschenweite kleiner als die Querlänge des Griffes (59) ausgelegt. Die Haken (63) verhindern das Abheben darunter liegender Abdeckungen.

### Zeichenerklärung:

- 1: Silooberfläche
- 2: Folienrand
- 3: Folienrand
- 4: Pressplatte
- 5: Kufe
- 6: Presseinrichtung
- 7: Motor
- 8: Handgriff
- 9: Schlaufe
- 10: Schlaufe
- 11: Abdeckung
- 12: Außenrand
- 13: Silowand
- 14: Schlaufe
- 15: Doppelschlaufe
- 16: Abdeckung
- 17: Doppelschlaufe
- 18: Abdeckung
- 19: Rahmen
- 20: Getriebe
- 21: Schreitfuß, innen
- 22: Schreitfuß, außen
- 23: Lagerung, vom
- 24: Lagerung, hinten
- 25: Unterkante
- 26: Formstück
- 27: Handgriff, rechts
- 28: Handgriff, links
- 29: Trittplatte
- 30: Führungsdorn
- 31: Schnecke
- 32: Schneckenrad
- 33: Zahnräder
- 34: Welle, vorne
- 35: Welle, hinten
- 36: Exzenter
- 37: Außenlager
- 38: Seitenplatte
- 39: Bolzen, vorne
- 40: Bolzen, hinten
- 41: Stopfvorrichtung
- 42: Stopfstück
- 43: Führung
- 44: Hebel
- 45: Stopfvorrichtung
- 46: Drehstück
- 47: Welle
- 48: Hebel
- 49: Verbindung
- 50: Vorschneideeinrichtung
- 51: Messer
- 52: Ausleger
- 53: Gleitplatte
- 54: Silowand
- 55: Führung
- 56: Hebel
- 57: Pfropfendorn
- 58: Dorn
- 59: Griff
- 60: Knoten
- 61: Knoten
- 62: Vogelschutzgitter
- 63: Haken

## Patentansprüche

1. Verfahren zum Abdecken und Abdichten von Siloanlagen wie Flach- und Durchfahrsilos oder freistehende Silohaufen, bei dem das Gut eingebracht, verdichtet und anschließend mit einer Abdeckung aus Längs- und/oder Querstreife an der Oberfläche bedeckt, abgedichtet und diese befestigt wird,
**dadurch gekennzeichnet, dass** die Abdichtung und Befestigung von Längs- oder Querstößen durch Einpressen der Ränder in die Silooberfläche (1) erfolgt.

2. Verfahren nach Anspruch 1, **dadurch gekennzeichnet, dass** nach Einpressen des aufliegenden Randes (2) der einen Abdeckung der zurückgeschlagene Rand (3) der zweiten Abdeckung umgeschlagen, darüber gelegt und eingepresst wird.

3. Verfahren nach den Ansprüchen 1 und 2, **dadurch gekennzeichnet, dass** das Einpressen der Abdeckung (2, 3, 11, 16, 18) in Form einer Schlaufe (9, 10, 15, 17) erfolgt, wobei das Ende der Abdeckung aus der Silageoberfläche heraussteht und umgelegt wird oder sich selbst umlegt.

4. Verfahren nach den Ansprüchen 1-4, **dadurch gekennzeichnet, dass** mit der Abdeckung jeweils eine zusätzliche Abdichtmaßnahme mit eingepresst wird.

5. Verfahren nach mindestens einem der obigen Ansprüche, **dadurch gekennzeichnet, dass** die Einpressrichtung in einem schrägen Winkel zur Silageoberfläche erfolgt.

6. Verfahren nach mindestens einem der obigen Ansprüche, **dadurch gekennzeichnet, dass** beim Einpressen der Folienschlaufe an ihrem unteren Ende eine Anhäufung von Folie erfolgt.

7. Verfahren nach Anspruch 1, **dadurch gekennzeichnet, dass** das Einpressen der beiden Folienränder (2, 3) gleichzeitig erfolgt.

8. Verfahren nach Anspruch 1, **dadurch gekennzeichnet, dass** vor dem Einpressen der Schlaufe (9, 10) die Silageoberfläche dort angeschnitten wird, wobei gegebenenfalls das Anschneiden zusammen mit dem Einpressen erfolgt.

9. Verfahren nach Anspruch 1, **dadurch gekennzeichnet, dass** das Einpressen durch ein schräg angeordnetes Werkzeug durch eine gleichzeitige Vor- und Hubbewegung erfolgt.

10. Verfahren nach den Ansprüchen 1 und 9, **dadurch gekennzeichnet, dass** die Einpressbewegung durch eine Fahrbewegung des Gerätes und ein Hubbewegung des Werkzeuges erfolgt.

11. Verfahren nach den Ansprüchen 1 und 9, **dadurch gekennzeichnet, dass** die eingepresste Folienschlaufe (2, 3, 9, 10, 14, 15, 17) an ihrer Unterseite aufgeweitet und verdichtet oder als Knäuel aufgefächert oder hineingestopft und verdichtet wird.

12. Verfahren nach den Ansprüchen 1 und 9, **dadurch gekennzeichnet**, das der Knäuel in einer an der Unterseite der Presseinrichtung (6) angeordnetes Formstück (26) entstandene Aufweitung durch Einpressen der Folie entsteht..

13. Verfahren nach den Ansprüchen 1 und 9, **dadurch gekennzeichnet, dass** das Auffächern und Einpressen des Knäuels durch eine am unteren Ende der Presseinrichtung (6) angebrachte Stopfvorrichtung (41) erfolgt, die durch eine federnde Aufhängung oder durch eine Auf- und Abbewegung angetrieben wird.

14. Verfahren nach den Ansprüchen 1, 9 und 13, **dadurch gekennzeichnet, dass** die Stopfeinrichtung asymmetrisch ausgebildet ist und sich in einer senkrechten Achse hin und her bewegt.

15. Verfahren nach mindestens einem der obigen Ansprüche, **dadurch gekennzeichnet, dass** vor der Presseinrichtung (6) eine Vorschneideeinrichtung (50) angeordnet ist und direkt über die Presseinrichtung (6) angetrieben wird.

16. Verfahren nach mindestens einem der obigen Ansprüche, **dadurch gekennzeichnet, dass** die Pressseinrichtung (6) am Ende der Pressstrecke die Folienschlaufe (2, 3, 14, 15, 17) bis zur vollen Tiefe einpresst.

17. Verfahren nach mindestens einem der obigen Ansprüche, **dadurch gekennzeichnet, dass** zur Sicherung der Abdeckung auf Sog zusätzliche Sicherungen in Art eines Pfropfens (57) in die Schlaufe eingebracht werden.

18. Verfahren nach Anspruch 17, **dadurch gekennzeichnet, dass** die Sicherung zur Befestigung von weiteren Abdeckungen entsprechende Befestigungsmöglichkeiten aufweist.

19. Einrichtung zur Durchführung des Verfahrens nach Anspruch 1, **dadurch gekennzeichnet, dass** an einem Schreitwerk mit nebeneinander liegenden Doppelkufen an der Außenseite einer Kufe (5) eine Pressplatte (4) mit schräg nach unten verlaufender Druckkante angeordnet ist.

20. Einrichtung zur Durchführung des Verfahrens nach den Ansprüchen 8 und 19,
**dadurch gekennzeichnet, dass** vor der Pressplatte (4) eine schräg nach unten verlaufende Schneidplatte angeordnet ist.

21. Einrichtung zur Durchführung des Verfahrens nach mindestens einem der vorgenannten Ansprüche, **dadurch gekennzeichnet, dass** eine Stopfeinrichtung am unteren Ende der der Pressplatte (4) durch eine Auswölbung der Pressplatte (4) oder ein entsprechend geformtes Pressstück gebildet wird.

22. Einrichtung zur Durchführung des Verfahrens nach mindestens einem der vorgenannten Ansprüche, **dadurch gekennzeichnet, dass** am hinteren Ende der Pressplatte ein federnd aufgehängter Stopfbügel oder Pressstück angeordnet ist.

23. Einrichtung zur Durchführung des Verfahrens nach mindestens einem der vorgenannten Ansprüche, **dadurch gekennzeichnet, dass** am hinteren Ende der Pressplatte (4) ein angetriebener Stopfbügel oder ein Pressstück angeordnet ist, dessen Antrieb gegebenenfalls über die Presseinrichtung (6) oder über einen Hebel vom Schreitfuß (22) aus erfolgt.

24. Einrichtung nach mindestens einem der vorgenannten Ansprüche, **dadurch gekennzeichnet, dass** am hinteren Ende der Pressplatte (4) ein angetriebenes asymmetrisch ausgebildetes Formstück an einer senkrechten Drehachse angeordnet ist, und über eine Gelenkverbindung mit dem Rahmen des Schreitwerks verbunden ist.

25. Einrichtung zur Durchführung des Verfahrens nach Anspruch 15, **dadurch gekennzeichnet, dass** die Vorschneideeinrichtung (50) aus einem am äußeren Schreitfuß (22) angebrachten, nach vorne vor den inneren Schreitfuß (21) sich erstreckenden Ausleger (52) mit unter ihm angeordneten Messer (51) besteht.

26. Einrichtung den Ansprüchen 15 und 25, **dadurch gekennzeichnet, dass** vorne am Ausleger (52) ein schräg nach unten gerichtetes Messer (51) und eine Gleitplatte (53) mit abgerundeter Vorderkante angeordnet sind.

27. Einrichtung nach den Ansprüchen15, 25 und 26, **dadurch gekennzeichnet, dass** der Ausleger (52) zum Einpressen der Schlaufe (2, 3, 14, 15, 17) am Wegende hochklappbar ausgerüstet ist.

28. Einrichtung zur Durchführung des Verfahrens nach Anspruch 16, **dadurch gekennzeichnet, dass** die Pressplatte (4) durch eine Schwenkeinrichtung zum Absenken der Vorderkante auf etwa die Arbeitstiefe aufweist.

29. Einrichtung nach mindestens einem der obigen Ansprüche, **dadurch gekennzeichnet, dass** die Pressplatte (4) eine zur Veränderung ihrer Schräge und Arbeitstiefe entsprechende Verstelleinrichtung aufweist.

30. Einrichtung nach mindestens einem der obigen Ansprüche, **dadurch gekennzeichnet, dass** die Pressplatte (4) zum Hochschwenken für den Transport eine Verstelleinrichtung mindestens bis zur Unterkante des Schreitfußes aufweist.

31. Einrichtung nach den Ansprüchen 26, 27 und 28, **dadurch gekennzeichnet, dass** die Pressplatte (4) eine zentrale Verstelleinrichtung aufweist, wobei die einzelnen Verstellungen jeweils um die vordere oder hintere Anlenkung der Pressplatte (4) am Schreitfuß (21, 22) erfolgt.

32. Einrichtung nach den Ansprüchen 26 - 29, **dadurch gekennzeichnet, dass** am hinteren Anlenkpunkt zum Hochschwenken in die Transportstellung eine Betätigung zum Ausrasten angeordnet ist.

33. Einrichtung nach den Ansprüchen 26 - 29, **dadurch gekennzeichnet, dass** die Pressplatte (4) zu ihrer vorderen Verstellung an ihrer Vorderseite eine bogenförmige Führung und Rasten zur jeweiligen Endlage aufweist.

34. Einrichtung nach den Ansprüchen 26 - 31, **dadurch gekennzeichnet, dass** für die Verstelleinrichtung ein gemeinsamer Hebel mit Unschaltungen vorgesehen ist.

35. Einrichtung nach mindestens einem der obigen Ansprüche, **dadurch gekennzeichnet, dass** vor der Pressplatte (4) ein Führungsdorn (30) für die Folie am Schreitfuß (21) in einer Querachse gelagert ist und eine nach unten gerichtete Federung aufweist.

36. Einrichtung nach Anspruch 35, **dadurch gekennzeichnet, dass** am Schreitfuß (21) für den Führungsdorn (30) zum Hochschwenken in die Transport- oder Absenkstellung eine entsprechende Rast angeordnet ist.

37. Einrichtung nach mindestens einem der obigen Ansprüche, **dadurch gekennzeichnet, dass** am hinteren Teil des äußeren Schreitfußes (22) eine Trittplatte (29) angebracht ist.

38. Einrichtung zur Durchführung des Verfahrens nach Anspruch 17, **dadurch gekennzeichnet, dass** die Sicherung aus einem in der einen Ansicht schmalen Dorn (58) mit Handgriff besteht und in der anderen knotenartige Verdickungen (60, 61) aufweist.
